**Europäisches Patentamt**

**European Patent Office**

**Office européen des brevets**

(19)

(11) Veröffentlichungsnummer : **0 031 007**
**B1**

(12) # EUROPÄISCHE PATENTSCHRIFT

(45) Veröffentlichungstag der Patentschrift :
**22.06.83**

(51) Int. Cl.³ : **F 02 P 13/00, H 01 T 13/16**

(21) Anmeldenummer : **80106393.4**

(22) Anmeldetag : **21.10.80**

(54) **Fremdgezündete Brennkraftmaschine mit je einem Hauptbrennraum pro Zylinder und einer Zündkammer.**

(30) Priorität : **19.12.79 DE 2951029**

(43) Veröffentlichungstag der Anmeldung :
**01.07.81 Patentblatt 81/26**

(45) Bekanntmachung des Hinweises auf die Patenterteilung : **22.06.83 Patentblatt 83/25**

(84) Benannte Vertragsstaaten :
**AT CH DE FR GB IT LI SE**

(56) Entgegenhaltungen :
**DE A 2 503 811**
**US A 1 342 205**
**Patents Abstracts of Japan, Band 2, Nr. 9,**
**23. Januar 1978 Seite 6662 M 77**

(73) Patentinhaber : **ROBERT BOSCH GMBH**
**Postfach 50**
**D-7000 Stuttgart 1 (DE)**

(72) Erfinder : **Latsch, Reinhard, Dr., Dipl.-Ing.**
**Alter Postweg 19**
**D-7143 Vaihingen (DE)**

**Fremdgezündete Brennkraftmaschine mit je einem Hauptbrennraum pro Zylinder und einer Zündkammer**

### Stand der Technik

Die Erfindung geht aus von einer fremdgezündeten Brennkraftmaschine gemäß Gattung des Anspruchs 1 bzw. von einem Zündkammereinsatz gemäß Gattung des Anspruchs 2. Bei bekannten Brennkraftmaschinen dieser Art besteht, wenn sie mit einem möglichst kraftstoffarm gehaltenen Kraftstoff-Luftgemisch oder bei üblichen Kraftstoff-Luftgemischen mit einer größeren Menge rückgeführten Abgases betrieben werden, die Gefahr, daß das Gemisch schlecht zündet. Um eine ausreichende, sichere Zündung und Reaktion der Betriebsstoffe miteinander bei möglichst geringem Kraftstoffanteil zu erzielen, wurden verschiedene Wege begangen, die darauf hinauslaufen, durch Schichtung eine Gemischanreicherung nahe der Zündstelle in einer Zündkammer zu erzielen. Durch Steigerung des Temperaturniveaus des Gemisches an der Zündstelle und durch Maßnahmen, die einem möglichst hohen Grad an Restgasfreiheit des zu zündenden Gemisches bewirken, kann ebenfalls ein hoher Grad an Abmagerung des Kraftstoff/Luftgemisches erzielt werden mit bei guter Ausnutzung des Kraftstoffs günstiger Abgaszusammensetzung.

Bei einer bekannten Ausführung sind die Mittel- und die Masseelektrode der Zündeinrichtung bis unmittelbar an die innere Mündung des Überströmkanals hingeführt, so daß der Zündfunke unmittelbar im stark turbulenten Strömungsbereich des einströmenden Frischgemisches aus Kraftstoff und Luft entsteht. Diese Lage bietet einerseits einen hohen Grad an Restgasfreiheit des zu zündenden Gemisches und andererseits ein hohes Temperaturniveau an der Zündstelle. Die Zündsicherheit dieser Einrichtung ist damit sehr groß, doch ist die Lebensdauer solcher Elektroden aufgrund der thermischen Belastung durch einströmende und ausströmende Brenngase sehr kurz (DE-A-25 03 811).

### Vorteile der Erfindung

Die erfindungsgemäße Brennkraftmaschine mit den kennzeichnenden Merkmalen des Anspruchs 1 und der Zündkammereinsatz mit den kennzeichnenden Merkmalen des Anspruchs 2 haben demgegenüber den Vorteil, daß die Zündstelle noch stärker in einen Bereich der Zündkammer gerückt wird, der von den in der Zündkammer enthaltenen Restgasen nicht beeinflußt ist. Durch die Ausgestaltung der Mittelelektrode, die mit der Wand der Zündkammer die Funkenstrecke bildet, ist eine genügend große Standfestigkeit der Elektrode gewährleistet. Weiterhin dient die mit Hilfe des Wärmerohrs temperaturgeregelte Zündkerze auch in vorteilhafter Weise der Erwärmung des in die Zündkammer einströmenden frischen Kraftstoff-Luftgemisches. Bei einer solchen Elektrode wird die sonst übliche Wirkung der Mittelelektrode, die dem Gemisch Wärme entziehen kann, vermieden.

Durch die in den den Ansprüchen 1 und 2 folgenden Ansprüchen aufgeführten Maßnahmen sind vorteilhafte Weiterbildungen und Verbesserungen der in den Ansprüchen 1 und 2 angegebenen Lösungen möglich.

### Zeichnung

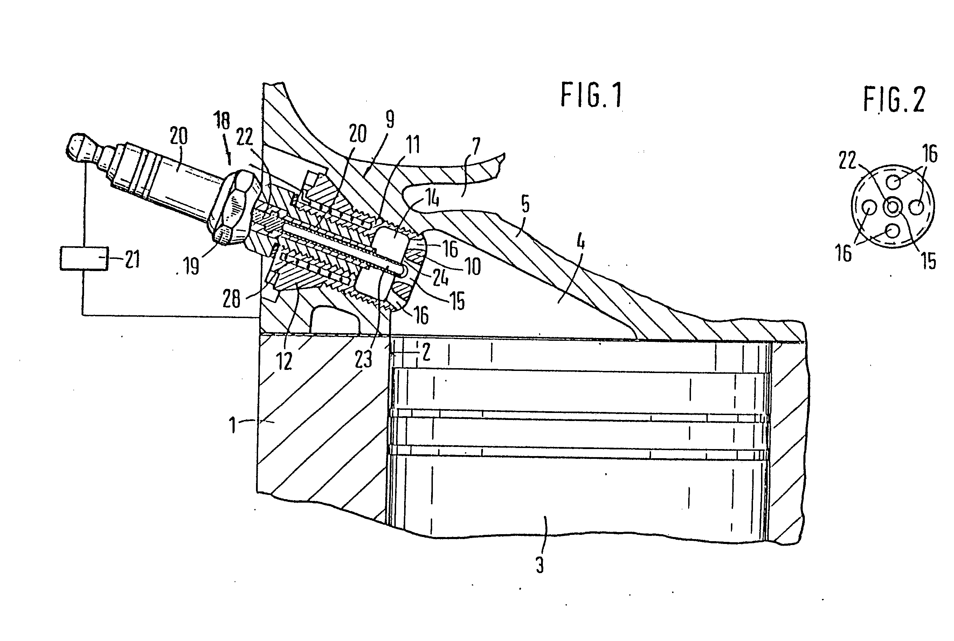

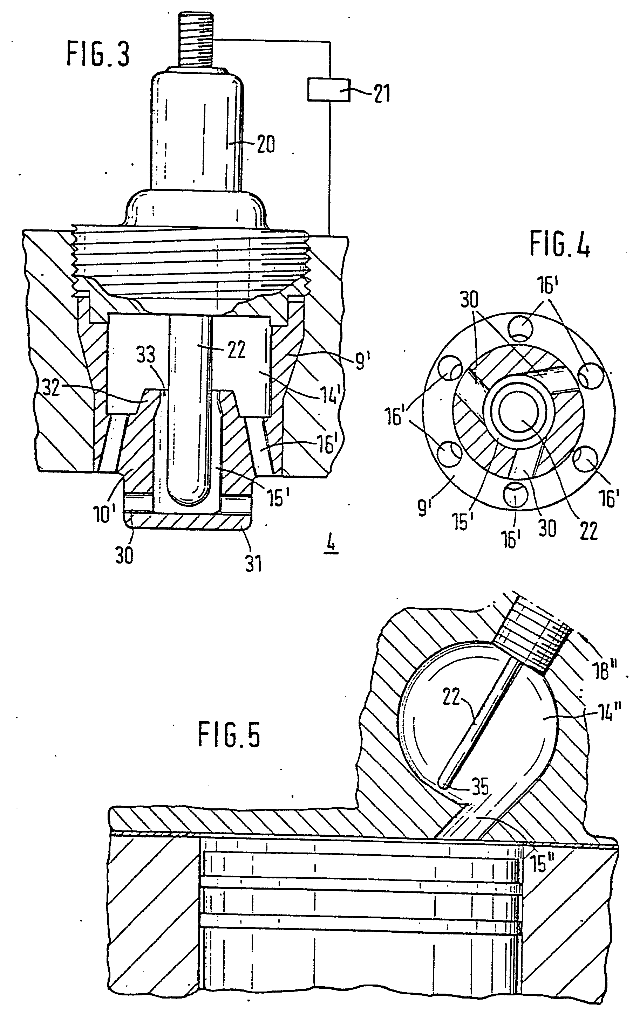

Drei Ausführungsbeispiele der Erfindung sind in der Zeichnung dargestellt und werden in der nachfolgenden Beschreibung näher erläutert. Es zeigen Fig. 1 ein Schnitt durch ein erstes Ausführungsbeispiel, Fig. 2 die stirnseitige Ansicht des Ausführungsbeispiels nach Fig. 1, Fig. 3 ein zweites Ausführungsbeispiel Fig. 4 einen Schnitt durch die Ausgestaltung nach Fig. 3 und Fig. 5 ein drittes Ausführungsbeispiel in vereinfachter Form.

### Beschreibung der Ausführungsbeispiele

In Fig. 1 ist ein Schnitt durch einen Zylinder einer Brennkraftmaschine zum Teil wiedergegeben. In dem Zylinderblock 1 befindet sich eine Zylinderbohrung 2, in der ein Kolben 3 angeordnet ist, der in bekannter Weise im Zylinder 2 einen Hauptbrennraum 4 einschließt. Dieser wird über eine nicht dargestellte Saugleitung, deren Eintrittsöffnung in den Hauptbrennraum durch ein Einlaßventil gesteuert wird, mit Kraftstoff-Luft-Gemisch versorgt. Ein ebenfalls nicht gezeigtes Auslaßventil dient in üblicher Weise zur Steuerung des Ausschubs der Verbrennungsprodukte aus dem Hauptbrennraum. Die sich an den Hauptbrennraum und an die Zylinderbohrung anschließenden Teile des Zylinderblocks 1 und eines den Zylinder 2 abschließender Zylinderkopfs 5, in dem üblicherweise die genannten Ventile angeordnet sind, werden, wie bekannt, z. B. durch Flüssigkeit, die entsprechende Hohlräume 7 in den genannten Teilen durchströmt, gekühlt.

In die den Hauptbrennraum 4 begrenzende Wand des Zylinderkopfs 5 ist ein Zündkammereinsatz 9 eingesetzt, der im wesentlichen rotationssymmetrisch ausgebildet ist und dessen Stirnseite 10 in den Hauptbrennraum 4 ragt.

Der Zündkammereinsatz 9 besteht aus einem kreiszylindrischen Teil 11, der an seiner Mantelfläche ein Schraubgewinde aufweist, mit dem der Zündkammereinsatz in die Wand des Zylinderkopfes einschraubbar ist und einen kegelförmigen Teil 12, der sich an den kreiszylindrischen Teil 11 anschließt und dessen Mantelfläche als Dichtfläche ausgebildet ist, durch die die Verbindung zwischen Hauptbrennraum und Umgebung dicht abgeschlossen wird. Im Bereich des kreiszylindrischen Teils 11 weist der Zündkammereinsatz 9 einen kreiszylindrischen Hohlraum auf, der eine Zündkammer 14 darstellt. In der brennraumseitigen Stirnwand 10 dieser Zündkammer ist koaxial zur Achse des Zündkammereinsatzes bzw. der Zündkammer ein Überströmkanal 15 vorgesehen, der von zusätzlichen Überströmkanälen 16, die ebenfalls die brennraumseitige Stirnwand durchdringen, umgeben ist. Als zusätzliche Überströmkanäle können z. B. vier symmetrisch zueinander angeordnete Kanäle vorgesehen werden, wie das der stirnseitigen Ansicht in Fig. 2 entnehmbar ist.

Koaxial zur Achse des Zündkammereinsatzes 9 ist von außen eine Funkenzündeinrichtung 18 eingesetzt. Diese ist in der Art einer Zündkerze ausgebildet mit einem in den Zündkammereinsatz 9 einschraubbaren Gehäuse 19, einen in diesem Gehäuse fixierten Isolierkörper 20 und einer außerhalb der Brennkraftmaschine an eine Spannungsquelle 21 anschließbare Mittelelektrode 22, die koaxial zur Achse des Zündkammereinsatzes durch den Isolierkörper 20 führt. Diese Mittelelektrode ist eine erste Elektrode der Funkenzündeinrichtung und ragt durch die Zündkammer 14 hindurch bis in den Überströmkanal 15 hinein. Dort befindet sich der kürzeste Abstand der Mittelelektrode von der Wand der Zündkammer, so daß bei Spannungsbeaufschlagung der Mittelelektrode der Zündfunke dort überspringt.

Der durch den Zündkammereinsatz 9 verlaufende Teil der Mittelelektrode 22 ist als sogenanntes Wärmerohr ausgebildet und weist zu diesem Zweck einen Hohlraum 23 auf, dessen Wände mit einer kapillare Hohlräume bildenden Auskleidung versehen sein können. Der Hohlraum ist dabei mit einer geringen Menge von verdampfbarem Medium gefüllt, dessen Verdampfungstemperatur den Einsatzpunkt für das Arbeiten des Wärmerohres bestimmt und somit auch die maximalen Elektroden-Temperatur, die mit Hilfe des Wärmerohrs eingehalten werden soll, festlegt. Als Füllmittel kann z. B. Natrium oder Kalium dienen, womit nährungsweise eine konstante Temperatur von 500 °C an der Elektrode aufrechterhalten werden kann.

Mit dem erfindungsgemäßen Zündkammereinsatz wird ein an sich bekanntes Brennverfahren durchgeführt, bei dem dem Hauptbrennraum ein relativ mageres Kraftstoff-Luftgemisch oder bei üblichem Kraftstoff-Luftgemisch eine größere Menge rückgeführten Abgases zugeführt wird, das beim Kompressionshub des Kolbens 3 über die Überströmkanäle 15 bzw. 16 in die Zündkammer 14 geschoben wird. Dort wird beim Einschubvorgang das vom Expansionstakt der Brennkraftmaschine verbliebene Restgas komprimiert und in den dem Hauptbrennraum 4 abgewandten Teil der Zündkammer verdrängt, so daß im Bereich der Funkenstrecke 24 zwischen Elektrodenspitze und Wand des Überströmkanals 15 das weitgehend restgasfreie Kraftstoff-Luftgemisch des Hauptbrennraums vorliegt. Aufgrund der guten Erwärmungsverhältnisse in der Zündkammer wird das dort einströmende magere Kraftstoff-Luftgemisch erwärmt und erhält somit eine bessere Zündfähigkeit als das im Hauptbrennraum vorhandene Gemisch. Die Erwärmung tritt insbesondere auch an der Mittelelektrode 22 auf, so daß die Zündfähigkeit des Gemisches im Bereich der Funkenstrecke 24 wesentlich verbessert ist. Nach der Entzündung des Gemisches mit Hilfe des Zündfunkens wird das in der Zündkammer 14 befindliche Gemisch infolge der Expansion in Form von Flammstrahlen über die Überströmkanäle in den Hauptbrennraum ausgetrieben. Mit Hilfe dieser Flammstrahlen wird das dort befindliche magere Gemisch entzündet.

Durch die Lage der Elektrode in Bezug auf den Überströmkanal ergibt sich eine sichere Entflammung der Hauptladung auch in unteren Drehzahl-, Last bzw. Leistungsbereichen der Brennkraftmaschine sowie bei hohen Luftzahlen Lambda im Vergleich zu üblichen Brennkraftmaschinen. Dadurch können deutliche Vorteile in Bezug auf Laufruhe und Kraftstoffverbrauch erzielt werden. Zudem ist die Klopfneigung solcher Brennkraftmaschinen gering. Mit Hilfe einer als Wärmerohr ausgebildeten Mittelelektrode sind auch die extremen Wärmebelastungen, die beim Bereich der Zündstelle auftreten, beherrschbar. In bekannter Weise weist ein Wärmerohr einen Verdampfungsbereich und einen Kondensationsbereich auf, die beide durch einen mehr oder weniger groß ausgebildeten Wärmetransportbereich getrennt sein können. Im vorliegenden Fall ist der in die Zündkammer ragende Teil der Mittelelektrode 22 als Verdampfungsbereich anzusehen, während der im Bereich des restlichen Teils des Zündkammereinsatzes 9 verlaufende Teil der Mittelelektrode als Kondensationsbereich ausgelegt ist. Dieser ist zum besseren Wärmeaustrausch wesentlich größer als der Verdampfungsbereich. Im Verdampfungsbereich wird wenigsten ein Teil der Füllung des Wärmerohrs durch die dort aufgenommene Wärme in dampfförmigen Zustand übergeführt, so daß der Dampf den gesamten Hohlraum 23 ausfüllt. Durch Wärmeentzug im Kondensationsbereich wird Dampf dort wieder in den flüssigen Zustand übergeführt und aufgrund der Kapillarwirkung der Auskleidung des Wärmerohrs in jeder Lage des Zündkammereinsatzes wieder zur Verdampfungsseite rückgeführt.

Der die Elektrode umgebende Isolierkörper 20 ist im Bereich der Kondensationszone des Wärmerohrs möglichst dünnwandig ausgeführt, so daß es hier zu einer verbesserten Wärmeableitung über den massiven Teil des Zündkammereinsatzes zum angrenzenden gekühlten Zylinderkopf 5 kommt. Duch den kegelförmigen Teil 12 wird ein intensiver Kontakt zwischen Zündkammereinsatz 9 und dem Zylinderkopf 5 hergestellt. Solange die Mittelelektrode noch kalt ist, wird durch das Wärmerohr in der Mittelelektrode fast keine Wärme abgeführt, da der Hohlraum 23, solange das Wärmerohr nicht arbeitet, d. h. solange wegen noch zu geringer Umgebungstemperatur die Füllung des Wärmerohres nicht verdampft, eine isolierende Wirkung hat. Damit aber wird der in die Zündkammer 14 ragende Teil der Mittelelektrode 22 schneller erwärmt, als das bei einer Elektrode ohne Wärmerohr der Fall wäre und schnell auf die optimale Arbeitstemperatur gebracht. Mehrere Überströmkanäle bieten den Vorteil, daß nicht die gesamte Ladung der Zündkammer an der Mittelelektrode vorbeiströmen muß, was eine extrem hohe Strömungsgeschwindigkeit in diesem Bereich verursachen würde, was sich ungünstig auf die Entflammung auswirkt. Zudem werden mehrere Zündfackeln zur Zündung der Hauptladung erzeugt, was eine vorteilhafte schnelle Umsetzung der Ladung bewirkt. Bei der gezeigten Anordnung wird zudem nur ein geringer Teil des eingeschobenen Frischgemisches an der Mittelelektrode erwärmt, so daß frühzeitig nach dem Start der Brennkraftmaschine bzw. bei niedriger Last die Zündfähigkeit eines kraftstoffarmen Gemisches erreicht wird.

An der Stelle an der der Funkenüberschlag erfolgt, wird zur Erhöhung der Standfestigkeit der Elektrode 22 die Wand verstärkt ausgeführt. Weiterhin kann die Elektrode 22 zur Verminderung des durch Funkenerosion erzeugten Verschleißes an Masse gelegt werden.

In weiterer Ausgestaltung der Erfindung kann in dem Zündkammereinsatz 9 entlang dem Verdampfungsteil des Wärmerohrs eine Heizwicklung 28 vorgesehen werden, durch die bei noch kalter Brennkraftmaschine bzw. noch kalter Mittelelektrode 22 die Elektrode erwärmt wird. Das Wärmerohr 22 gewährleistet dabei den Wärmetransport auch an den in die Zündkammer 14 ragenden Teil der Elektrode.

Fig. 3 zeigt eine andere Ausführungsform der erfindungsgemäßen Lösung nach Fig. 1. Auch hier ist ein mit seiner Stirnseite 10' in den Brennraum 4 ragender Zündkammereinsatz 9' vorgesehen, der eine Zündkammer 14' enthält, durch die die als Wärmerohr ausgebildete Mittelelektrode 22 führt. Wie im vorigen Ausführungsbeispiel ist die Mittelelektrode in einen Isolierkörper 20 eingebettet und am äußeren Ende mit einer Spannungsquelle 21 verbunden, durch die die Elektrode mit der Zündspannung versorgt wird. Abweichend vom Ausführungsbeispiel nach Fig. 1 ist die brennraumseitige Stirnwand 10' dicker ausgeführt, so daß es möglich ist, daß der auch hier vorgesehene, koaxial zur Achse des Zündkammereinsatzes bzw. der Elektrode 22 liegende Überströmkanal 15' sich in mehrere seitlich von diesem abzweigende Teilkanäle 30 verzweigen kann über welche der Überströmkanal 15' in den Hauptbrennraum 4 mündet. Der Überströmkanal 15' hat dabei im wesentlichen die Form eines von der Zündkammer 14' ausgehenden Sackloches. Die Teilkanäle 30 liegen in einer Ebene senkrecht zur Achse des Überströmkanals 15' und zweigen von diesem an seinem äußersten Ende tangential ab, wie das dem Schnitt gemäß Fig. 4 zu entnehmen ist. Im Bereich des Überströmkanals 15' ist die Stirnseite 10' des Zündkammereinsatzes verstärkt ausgebildet in der Form, daß diese einen in den Hauptbrennraum 4 ragenden Kopf 31 aufweist. Auf der diesem gegenüberliegenden, die Zündkammer 14' begrenzenden Seite weist die Stirnseite 10' eine Manschette 32 auf, die in die Zündkammer 14' vorspringt und den Durchmesser des Überströmkanals 15' an dieser Stelle verringert. Die Mittelelektrode 22 ragt nun durch die Manschette hindurch in den Überströmkanal 15' hinein und bis nahezu zu seinem Ende. Zwischen der Manschette 32 und der Mittelelektrode 22 befindet sich dabei der engste Abstand zur Wand des Zündkammereinsatzes 9, so daß dort die Funkenstrecke 33 gebildet wird.

Weiterhin sind zusätzliche Überströmkanäle 16' vorgesehen, die in dem den Kopf 31 umgebenden Ringfeld der Stirnseite 10' in den Hauptbrennraum austreten. Wie dem Schnitt gemäß Fig. 4 durch den Zündkammereinsatz 9' in der Ebene der Teilkanäle 30 entnehmbar ist, sind symmetrisch um den Überströmkanal 15' herum 6 zusätzliche Überströmkanäle 16' verteilt, wobei bei drei dieser Überströmkanäle 16' die Achse des zusätzlichen Überströmkanals in einer Ebene mit der Achse des jeweils zugeordneten Teilkanals 30 liegt.

Durch diese Ausgestaltung wird in ähnlicher Weise wie beim Ausführungsbeispiel nach Fig. 1 nur ein Teil des in die Zündkammer 14' einzuschiebenden Frischgemisches an der als Wärmerohr ausgebildeten Mittelelektrode 22 vorbeigeführt und dabei erwärmt. Nach dem Passieren einer Anwärmstrecke, die zwischen der Einmündung der Teilkanäle in den Überströmkanal 15' und der Funkenstrecke 33 liegt, wird das Kraftstoff-Luftgemisch bei Spannungsbeaufschlagung im Bereich der Funkenstrecke durch einen Funken entflammt. Mit der beschriebenen Ausgestaltung kann der Vorwärmebereich bzw. auch die Vorwärmdauer gegenüber der Ausführung nach Fig. 1 erhöht werden, was zur verstärkten Wärmeabgabe an den zu entzündenden Gemischteil führt. Mit Hilfe der tangential einmündenden Teilkanäle wird eine Drallströmung erzeugt, die eine Steigerung des konvektiven Wärmeübergangs mit sich bringt und eine Erhöhung der Verweilzeit des Gemisches an der Mittelelektrode 22. Die besondere Anordnung der zusätzlichen Überströmkanäle 16' in Beziehung zum Verlauf der Teilkanäle 30 ergibt eine intensive Flammkernbildung nach der Entzündung des Gemisches in der Zündkammer 14'. Das bedeutet eine Verbesserung der Entflammbarkeit des im Hauptbrennraum verbliebenen restlichen Gemisches. Bezüglich der Temperaturregelung der Mittelelektrode 22 gilt das zu Fig. 1 Gesagte. Insbesondere kann auch hier mit Hilfe einer zusätzlichen Heizeinrichtung bei Kaltstart, beim Leerlauf oder beim Teillastbetrieb die Elektrode auf die optimale Temperatur erwärmt werden.

Bei einer gegenüber den oben mit Fig. 1 bis 4 beschriebenen Ausgestaltungen vereinfachten Ausführung gemäß Fig. 5 ist eine Zündkammer 14" mit einem etwa kreisförmigen Querschnitt vorgesehen, in die in Bezug auf den kreisförmigen Querschnitt tangential ein Überströmkanal 15" einmündenden, der die Zündkammer 14" mit dem Hauptbrennraum 4 verbinden und die bereits oben beschrieben Funktion hat. Etwa der Eintrittsöffnung des Überströmkanals 15" gegenüber ist eine Zündeinrichtung 18″ der Art wie vorstehend beschrieben in die Wand der Zündkammer eingesetzt. Die als Wärmerohr ausgebildete Mittelelektrode 22 ragt dabei diametral durch die Zündkammer, wobei die Elektrodenspitze 35 kurz vor der Wand der Zündkammer in den den Überströmkanal umgebenden Wandbereich endet und dort bei Spannungsbeaufschlagung eine Funkenstrecke 24 zur Zündkammerwand bildet. Die Nähe der Funkenstrecke zum aus dem Hauptbrennraum eintretenden Frischgemisch bringt die eingangs zu den vorstehenden Ausführungsbeispielen genannten Vorteile mit sich. Es ist dabei günstig, die Funkenstrecke in den Bereich beruhigter Strömung zu legen und zu vermeiden, wie gezeigt, daß die Funkenstrecke im freien Strahl des einströmenden Frischgemisches liegt. Damit wird eine bessere Entzündungsfähigkeit des an der Mittelelektrode erwärmbaren Gemisches erzielt. Die sich in der Zündkammer in Pfeilrichtung ergebende Strömung gelangt aufgrund der erfindungsgemäßen Ausgestaltung der Zündeinrichtung ungestört zur Zündstelle.

**Ansprüche**

1. Fremdgezündete Brennkraftmaschine mit einem Hauptbrennraum (4) pro Zylinder (2) und einer dem Hauptbrennraum (4) zugeordneten Zündkammer (14 ; 14′ ; 14″), die über wenigstens einen Überströmkanal (15 ; 15′ ; 15″) mit dem Hauptbrennraum (4) verbunden ist und über diesen Überströmkanal (15 ; 15′ ; 15″) mit Betriebsgemisch versorgt wird sowie mit einer Funkenzündeinrichtung mit einer ersten Elektrode (22), die mit der Wand der Zündkammer (14 ; 14′ ; 14″) eine Funkenstrecke (24 ; 33) bildet, wobei die erste Elektrode (22) durch die Zündkammer (14 ; 14′ ; 14″) hindurch in die Nähe eines den oder einen der Überströmkanäle umgebenden Wandbereiche (15, 15′) ragt und dort den kürzesten, die Lage des Zündfunkens bestimmenden Abstand (24 ; 33) zur Wand der Zündkammer hat, dadurch gekennzeichnet, daß die erste Elektrode (22) als Wärmerohr ausgebildet ist.

2. Zündkammereinsatz (9) zum Einsetzen in die Brennraumwand (5) einer Brennkraftmaschine mit wenigstens einem Überströmkanal (15 ; 15′ ; 15″) zur Verbindung der Zündkammer (14 ; 14′ ; 14″) mit dem Hauptbrennraum (4) und zur Übernahme des Betriebsgemisches aus dem Hauptbrennraum (4) und mit einer an eine Spannungsquelle (21) anschließbaren Funkenzündeinrichtung mit einer ersten Elektrode (22), die mit der Wand der Zündkammer (14 ; 14′ ; 14″) bei Spannungsbeaufschlagung eine Funkenstrecke (24) bildet, wobei die erste Elektrode (22) durch die Zündkammer (14, 14′, 14″) hindurch in die Nähe eines den Überströmkanal (15) oder einen der Überströmkanäle umgebenden Wandbereich ragt und dort den kürzesten, die Lage des Zündfunkens bestimmenden Abstand zur Wand der Zündkammer (14, 14′, 14″) hat, dadurch gekennzeichnet, daß die erste Elektrode (22) als Wärmerohr ausgebildet ist.

3. Brennkraftmaschine oder Zündkammereinsatz nach Anspruch 1 oder 2, dadurch gekennzeichnet, daß die erste Elektrode (22) in den oder einen der Überströmkanäle (15) hineinragt und dort den kürzesten, die Lage des Zündunkens bestimmenden Abstand zur Wand der Zündkammer hat.

4. Brennkraftmaschine oder Zündkammereinsatz nach Anspruch 3, dadurch gekennzeichnet, daß die Zündkammer (14) rotationssymmetrisch ausgebildet ist und die Funkenzündeinrichtung (18) koaxial auf der dem Brennraum abgewandten Seite in den Zündkammereinsatz (9) einsetzbar ist und daß in der brennraumseitigen Wand (10, 10′) eine zur ersten Elektrode (22) der Zündeinrichtung (18) koaxialer Überströmkanal (15, 15′) vorgesehen ist.

5. Brennkraftmaschine oder Zündkammereinsatz nach Anspruch 4, dadurch gekennzeichnet, daß der koaxiale Überströmkanal (15, 15′) von mehreren zusätzlichen Überströmkanälen (16, 16′) umgeben ist.

6. Brennkraftmaschine oder Zündkammereinsatz nach Anspruch 5, dadurch gekennzeichnet, daß der zur ersten Elektrode (22) koaxiale Überströmkanal (15′) sich in mehrere in einer zur Elektrodenachse senkrechten Ebene oder in einer dazu kegelförmigen Ebene liegende Überström-Teilkanäle (30) verzweigt.

7. Brennkraftmaschine oder Zündkammereinsatz nach Anspruch 6, dadurch gekennzeichnet, daß die Überström-Teilkanäle (30) tangential von dem zur ersten Elektrode (22) koaxialen Überströmkanal (15′) abführen.

8. Brennkraftmaschine oder Zündkammereinsatz nach einem der Ansprüche 6 oder 7, dadurch gekennzeichnet, daß wenigstens ein Teil der den zur ersten Elektrode (22) koaxialen Überströmkanal (15′) umgebenden Überströmkanäle (16′) so angeordnet ist, daß die Achse der entsprechenden Überströmkanäle (16′) die Achsen der Überströmteilkanäle (30) im Hauptbrennraum (4) schneiden.

9. Brennkraftmaschine oder Zündkammereinsatz nach einem der Ansprüche 5-8, dadurch gekennzeichnet, daß das zündkammerseitige Ende des zur ersten Elektrode (22) koaxialen Überströmkanals (15′) im Querschnitt zur Festlegung der Zündfunkenlage verringert ist.

10. Brennkraftmaschine oder Zündkammereinsatz nach Anspruch 9, dadurch gekennzeichnet, daß der in den zur Elektrode (22) koaxiale Überströmkanal (15′) ragende Teil der Elektrode etwa so lang ist wie der frei durch die Zündkammer führende Teil der Elektrode (22).

11. Brennkraftmaschine oder Zündkammereinsatz nach einem der vorstehenden Ansprüche, dadurch gekennzeichnet, daß die erste Elektrode (22) die Masseelektrode der Funkenzündeinrichtung (18) bildet.

12. Brennkraftmaschine oder Zündkammereinsatz nach Anspruch 10, dadurch gekennzeichnet, daß die das Wärmerohr bildende Wand der ersten Elektrode (22) an der engsten Stelle zwischen Zündkammerwand und Elektrode verstärkt ausgeführt ist.

13. Brennkraftmaschine oder Zündkammereinsatz nach einem der vorstehenden Ansprüche, dadurch gekennzeichnet, daß die erste Elektrode (22) durch eine Heizeinrichtung (28) insbesondere bei Start, Warmlauf und niedrigem Lastbereich der Brennkraftmaschine zusätzlich erwärmbar ist.

## Claims

1. A combustion engine supplied with external ignition comprising a main combustion chamber (4) per cylinder (2) and ignition chamber (14 ; 14' ; 14'') associated with the main combustion chamber (4) and which is connected by at least one overflow duct (15 ; 15' ; 15'') to the main combustion chamber (4) and is supplied with an operating mixture through the said overflow duct (15 ; 15' ; 15'') and comprising a spark ignition device including a first electrode (22) which, together with the wall of the ignition chamber (14 ; 14' ; 14''), forms a spark gap (24 ; 33) wherein the first electrode (22) projects through the ignition chamber (14 ; 14' ; 14'') into the vicinity of a wall region surrounding the overflow duct (15, 15') or one of the overflow ducts and at that location is at the shortest distance (24 ; 33) from the wall of the ignition chamber determining the position of the ignition spark, characterised in that, the first electrode (22) is formed as a heat pipe.

2. An ignition chamber unit (9) for insertion in the combustion chamber wall (5) of a combustion engine, comprising at least one overflow duct (15 ; 15' ; 15'') for connecting the ignition chamber (14 ; 14' ; 14'') to the main combustion chamber (4) and for accepting the operating mixture from the main combustion chamber (4) and comprising a spark ignition device which can be connected to a voltage source (21) comprising a first electrode (22) which, together with the wall of the ignition chamber (14 ; 14' ; 14''), forms a spark gap (24) when voltage is applied, wherein the first electrode (22) projects through the ignition chamber (14 ; 14' ; 14'') into the vicinity of a wall region surrounding the overflow duct (15) or one of the overflow ducts and at that location is at the shortest distance from the wall of the ignition chamber (14, 14', 14'') determining the position of the ignition spark, characterised in that, the first electrode (22) is formed as a heat pipe.

3. A combustion engine or an ignition chamber unit according to claim 1 or 2, characterised in that, the first electrode (22) projects into the overflow duct or one of the overflow ducts (15) and at that location is at the shortest distance from the wall of the ignition chamber determining the position of the ignition spark.

4. A combustion engine or ignition chamber unit according to claim 3, characterised in that, the ignition chamber (14) is made rotationally symmetrical and the spark ignition device (18) can be inserted coaxially into the ignition chamber unit (9) at the end remote from the combustion chamber and that an overflow duct (15, 15') coaxial with respect to the first electrode (22) of the ignition device (18) is provided in the wall (10, 10') at the combustion chamber end.

5. A combustion engine or ignition chamber unit according to claim 4, characterised in that, the coaxial overflow duct (15, 15') is surrounded by a plurality of additional overflow ducts (16, 16').

6. A combustion engine or ignition chamber unit according to claim 5, characterised in that, the overflow duct (15') coaxial with respect to the first electrode (22) branches into a plurality of overflow duct portions (30) lying in a plane perpendicular to the axis of the electrode or in a plane conical with respect thereto.

7. A combustion engine or ignition chamber unit according to claim 6, characterised in that, the overflow duct portions (30) lead tangentially from the overflow duct (15') coaxial with respect to the first electrode (22).

8. A combustion engine or ignition chamber unit according to one of claims 6 or 7, characterised in that, at least a portion of the overflow ducts (16') surrounding the overflow duct (15') coaxial with respect to the first electrode (22) is so arranged that the axes of the corresponding overflow ducts (16') intersect the axes of the overflow duct portions (30) in the main combustion chamber (4).

9. A combustion engine or ignition chamber unit according to one of claims 5 to 8, characterised in that, the ignition chamber end of the overflow duct (15') coaxial with respect to the first electrode (22) is reduced in cross-section to establish the position of the ignition spark.

10. A combustion engine or ignition chamber unit according to claim 9, characterised in that, that portion of the electrode projecting into the overflow duct (15') coaxial with respect to the electrode (22) is substantially as long as that portion of the electrode (22) passing freely through the ignition chamber.

11. A combustion engine or ignition chamber unit according to one of the preceding claims, characterised in that, the first electrode (22) forms the earth electrode of the spark ignition device (18).

12. A combustion engine or ignition chamber unit according to claim 10, characterised in that, the wall of the first electrode (22) forming the heat pipe is strengthened at the narrowest position between the ignition chamber wall and the electrode.

13. A combustion engine or ignition chamber unit according to one of the preceding claims, characterised in that, the first electrode (22) can be additionally heated by a heating device (28) particularly during starting, warming up and over the low load range of the combustion engine.

## Revendications

1. Moteur à combustion interne, à allumage commandé, avec une chambre de combustion principale (4) par cylindre (2) et une chambre d'allumage (14 ; 14' ; 14") associée à la chambre de combustion principale (4), chambre d'allumage qui est reliée à la chambre de combustion principale (4) par au moins un conduit d'écoulement (15 ; 15' ; 15") et qui est alimentée en mélange de fonctionnement par ce conduit d'écoulement (15 ; 15' ; 15"), ainsi qu'avec un dispositif d'allumage à étincelles comportant une première électrode (22), qui forme un trajet d'étincelle (24 ; 33) avec la paroi de la chambre d'allumage (14 ; 14' ; 14"), la première électrode (22) s'avançant à travers la chambre d'allumage (14 ; 14' ; 14") à proximité de parties de paroi (15, 15') entourant le ou l'un des conduits d'écoulement et ayant, à cet endroit, la distance la plus courte (24 ; 33), déterminant la position de l'étincelle d'allumage, à la paroi de la chambre d'allumage, caractérisé en ce que la première électrode (22) est agencée sous forme de tube thermique.

2. Garniture de chambre d'allumage (9) pour introduction dans la paroi de chambre de combustion (5) d'un moteur à combustion interne avec au moins un conduit d'écoulement (15 ; 15' ; 15") pour relier la chambre d'allumage (14 ; 14' ; 14") à la chambre de combustion principale et pour reprendre le mélange de fonctionnement de la chambre de combustion principale (4) et avec un dispositif d'allumage à étincelles se raccordant à une source de tension (21) et comportant une première électrode (22) qui forme avec la paroi de la chambre d'allumage (14 ; 14' ; 14") un trajet d'étincelle (24) en cas de sollicitation par tension, la première électrode (22) s'avançant à travers la chambre d'allumage (14, 14', 14") à proximité d'une partie de paroi entourant le conduit d'écoulement (15) ou l'un des conduits d'écoulement et ayant, à cet endroit, la distance la plus courte, déterminant la position de l'étincelle d'allumage, à la paroi de la chambre d'allumage (14, 14', 14"), caractérisée en ce que la première électrode (22) est agencée sous forme de tube thermique.

3. Moteur à combustion interne ou garniture de chambre d'allumage selon l'une quelconque des revendications 1 ou 2, caractérisés en ce que la première électrode (22) pénètre dans le ou l'un des conduits d'écoulement (15) et à cet endroit, la distance la plus courte, déterminant la position de l'étincelle d'allumage, à la paroi de la chambre d'allumage.

4. Moteur à combustion interne ou garniture de chambre d'allumage selon la revendication 3, caractérisés en ce que la chambre d'allumage (14) est réalisée avec une forme de révolution et que le dispositif d'allumage à étincelles (18) peut être introduit coaxialement dans la garniture de chambre d'allumage (9) du côté situé à l'opposé de la chambre de combustion et en ce qu'il est prévu dans la paroi (10, 10') côté chambre de combustion un conduit d'écoulement (15, 15') coaxial à la première électrode (22) du dispositif d'allumage (18).

5. Moteur à combustion interne ou garniture de chambre d'allumage selon la revendication 4, caractérisés en ce que le conduit d'écoulement coaxial (15, 15') est entouré par plusieurs conduits d'écoulement supplémentaires (16, 16').

6. Moteur à combustion interne ou garniture de chambre d'allumage selon la revendication 5, caractérisés en ce que le conduit d'écoulement (15') coaxial à la première électrode (22) se ramifie en plusieurs conduits d'écoulement élémentaires (30) disposés dans un plan perpendiculaire à l'axe de l'électrode ou dans un plan incliné sur lui.

7. Moteur à combustion interne ou garniture de chambre d'allumage selon la revendication 6, caractérisés en ce que les conduits d'écoulement élémentaires (30) partent tangentiellement du conduit d'écoulement (15') coaxial à la première électrode (22).

8. Moteur à combustion interne ou garniture de chambre d'allumage selon l'une des revendications 6 ou 7, caractérisés en ce qu'au moins une partie des conduits d'écoulement (16') entourant le conduit d'écoulement (15') coaxial à la première électrode (22) est disposée de manière que l'axe des conduits d'écoulement correspondants (16') recoupe les axes des conduits d'écoulement élémentaires (30) de la chambre de combustion principale (4).

9. Moteur à combustion interne ou garniture de chambre d'allumage selon l'une des revendications 5 à 8, caractérisés en ce que l'extrémité côté chambre d'allumage du conduit d'écoulement coaxial à la première électrode (22) a une section réduite pour déterminer la position de l'étincelle d'allumage.

10. Moteur à combustion interne ou garniture de chambre d'allumage selon la revendication 9, caractérisés en ce que la partie de l'électrode (22) pénètrant dans le conduit d'écoulement (15') coaxial à l'électrode (22) est sensiblement aussi longue que la partie de l'électrode (22) traversant librement la chambre d'allumage.

11. Moteur à combustion interne ou garniture de chambre d'allumage suivant l'une des revendications précédentes, caractérisés en ce que la première électrode (22) constitue l'électrode de masse du dispositif d'allumage à étincelles (18).

12. Moteur à combustion interne ou garniture de chambre d'allumage selon la revendication 10, caractérisés en ce que la paroi de la première électrode (22) constituant le tube thermique est de réalisation renforcée dans la zone la plus étroite entre la paroi de la chambre d'allumage et l'électrode.

13. Moteur à combustion interne ou garniture de chambre d'allumage selon l'une des revendications précédentes, caractérisés en ce que la première électrode (22) peut, de plus, être réchauffée par un dispositif de chauffage (28), notamment lors du démarrage, de la marche à chaud et d'un domaine de faible charge du moteur à combustion interne.

FIG.1 FIG.2

0 031 007

FIG.3

FIG.4

FIG.5